# EUROPÄISCHE PATENTANMELDUNG

(11) **EP 0 624 727 A1**
(43) Veröffentlichungstag der Anmeldung: **17.11.1994**
(21) Anmeldenummer: 94107114.4
(22) Anmeldetag: 06.05.1994
(51) Int. Cl.: F02M 59/44, F02M 59/34

(54) **Kraftstoffeinspritzpumpe**

(30) Priorität: 14.05.1993 US 62669
(71) Anmelder: DEERE & COMPANY, Moline, Illinois 61265 (US)
(72) Erfinder: Tracy, Lawrence Paul, Hudson, Iowa 50643 (US); Norton, Richard Gene, Hudson, Iowa 50643 (US)
(74) Vertreter: Feldmann, Bernhard

(57) **Zusammenfassung**

Es wird eine einfache Anordnung beschrieben, durch die hohe Kraftstoffabgaben an einen turbogeladenen Motor so lange unterbunden werden können, bis ein ausreichender Turboladerdruck aufgebaut ist, um eine ausreichende Verbrennung zu gewährleisten. Hierfür wird ein einfacher Stoßdämpfer (50) verwendet, der die Bewegung der Drosselwelle (12) der Kraftstoffeinspritzpumpe (10) einschränkt. Es wird ein nachgiebig ausgebildeter Drosselhebel (14) verwendet, durch den die Bedienungsperson den Gashebel auch dann in die gewünschte Lage bringen kann, wenn die Bewegung der Drosselwelle (12) durch den Stoßdämpfer (50) eingeschränkt ist. Vorzugsweise ist die Dämpfungseinrichtung vollständig innerhalb des Pumpengehäuses (30) untergebracht, wo sie gegen Verschmutzung geschützt ist und ständig von sauberem Kraftstoff gespült wird.

## Beschreibung

Die Erfindung betrifft eine Kraftstoffeinspritzpumpe mit einer in einer Befestigungsstruktur drehbar gelagerten Drosselwelle, durch die in Abhängigkeit ihrer Drehlage das Kraftstoffabgabevolumen einstellbar ist, und mit einem Drosselhebel, durch den die Drehlage der Drosselwelle einstellbar ist.

Durch die Emissionsbestimmungen für Dieselmotoren ist das zulässige Auspuffniveau hinsichtlich seiner Spitzenwerte, beim Beschleunigen und für maximale Durchzugsvermögen des Motors, wie sie durch US Federal Smoke Cycle gemessen werden, beschränkt. Ohne den Einsatz von Vorrichtungen, die die Kraftstoffabgabe verzögern, bis ein ausreichender Turboladerdruck für eine ausreichende Verbrennung zur Verfügung steht, können turbogeladene Motoren mit hohem effektiven Mitteldruck (BMEP) die Spitzen- und Beschleunigungs-Abgasgrenzwerte nicht erfüllen.

Es ist bekannt, diese Verzögerung der Kraftstoffabgabe auf zwei unterschiedliche Weisen zu realisieren. Zum einen kann eine elektronische Verzögerung eingesetzt werden. Dies erfordert ein elektronisches Kraftstoffdosiersystem, welches nicht an jedem Fahrzeug vorhanden ist. Zum anderen kann eine Aneroidsteuerung verwendet werden, welche unmittelbar den Turboladerdruck erfaßt und diesen für die Steurung der Einspritzmenge heranzieht. Solche Aneroide erfordern eigene Druckabgriffsstellen im Einlaßkanal, Rohrleitungen, Druck-Bewegungs-Umsetzer und komplizierte innere Pumpenverbindungen.

Die der Erfindung zugrunde liegende Aufgabe wird darin gesehen, ein Steuersystem für eine Kraftstoffeinspritzpumpe zur Verfügung zu stellen, das die stoßweise Ruß- oder Abgasabgabe bei plötzlichem Wechsel der Drosselposition eines Motors mit Turbolader begrenzt. Es soll ein einfacher Mechanismus bereitgestellt werden, der eine hohe Kraftstoffabgabe so lange begrenzt, bis ein befriedigender Turboladerdruck für eine ausreichende Verbrennung zur Verfügung steht. Dabei soll die Verwendung einer elektronischen Verzögerung oder eines Aneroids entbehrlich sein.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß findet eine auf der Drosselwelle befestigte Nockenstruktur und ein Stoßdämpfer oder ein ähnlicher Bewegungsdämpfer Anwendung, um die Bewegung der Drosselwelle zu begrenzen. Insbesondere verhindert der Stoßdämpfer eine plötzliche Drehbewegung der Drosselwelle und verzögert damit hohe Kraftstoffabgaben, bis eine ausreichende Turboladerverdichtung für eine ausreichende Verbrennung zur Verfügung steht.

Durch die erfindungsgemäße Lösung können die starken Abgasabgaben beim Beschleunigen oder die Spitzenabgaswerte, wie sie während der vorgeschriebenen laufenden Abgasprüfungen gemessen werden, erheblich vermindert werden. Ferner nehmen auch die sichtbaren "Abgaswolken", die aus dem Auspuff abgeblasen werden, ab.

Der Stoßdämpfer enthält vorzugsweise einen Zylinder, einen teilweise innerhalb des Zylinders angeordneten Kolben sowie eine Feder, die vollständig innerhalb des Zylinders liegt und den Kolben aus dem Zylinder heraus drängt. Insbesondere die Verwendung derartiger Stoßdämpfer führt zu einer Reihe von Vorteilen. Sie weisen einen einfachen Aufbau auf. Es sind weder Steuersysteme noch komplizierte Verbindungen, wie bei elektronischen Verzögerungsbegrenzern oder bei Abgasbegrenzern des Aneroid-Typs erforderlich. Stoßdämpfer sind sehr kostengünstig herstellbar und erfordern weder eine externe Steuerung noch teure Elektronik. Sie sind sehr haltbar und äußerst einfache Bauteile. Wenn sie vollständig innerhalb des Gehäuses der Kraftstoffpumpe angeordnet sind, werden sie durch reinen Kraftstoff geschmiert und sind vor Verschmutzungen geschützt. Ferner sind sie innerhalb der Kraftstoffpumpe vor unerlaubtem Eingriff geschützt, denn es müßte zuerst die Kraftstoffeinspritzpumpe wenigstens teilweise zerlegt werden, um den Stoßdämpfer unwirksam zu machen.

Das Zusammenwirken zwischen Nockenstruktur und Stoßdämpfer ist gemäß einer vorteilhaften Weiterbildung der Erfindung so ausgebildet, daß ein vorstehender Teil der Nockenstruktur sich bei Drehung der Drosselwelle in eine Richtung auf ein wirksames Ende (hervorstehendes Kolbenende) des Stoßdämpfers zu bewegt und bei Drehung der Drosselwelle in die entgegengesetzte Richtung von diesem weg bewegt, wobei das wirksame Ende des Stoßdämpfers mit der Nockenstruktur wenigstens dann in Eingriff tritt, wenn die Nockenstruktur sich unter Überwindung wenigstens einer vorgebbaren Wegstrecke auf den Kolben zu bewegt hat. Hierdurch bleiben kleine rasche Veränderungen der Drosseleinstellung von der Dämpfungseinrichtung unbeeinflußt. Für diesen Zweck kann beispielsweise zweckmäßigerweise ein Anschlag vorgesehen sein, gegen den ein Kolben des Stoßdämpfers bei einer vorgebbaren Lage anstößt, wenn die Drosselwelle verdreht wird.

Als weitere Maßnahme wird gemäß einer Weiterbildung der Erfindung vorgeschlagen, daß sich die Nockenstruktur und der mit Zylinder und Kolben ausgestattete Stoßdämpfer in dem Gehäuse der Kraftstoffeinspritzpumpe befinden, die mit Arbeitsflüssigkeit gefüllt ist. Der Zylinder enthält eine Ablaßöffnung, die als eine den Durchfluß begrenzende Drosselstelle ausgebildet ist, durch die der Durchfluß der Arbeitsflüssigkeit aus dem Zylinder gesteuert wird, wenn der Kolben beim Verdrehen der Drosselwelle durch die Nockenstruktur in den Zylinder gedrückt wird. Durch geeignete Auslegung der Drosselstelle können somit die Dämpfungseigenschaften des Stoßdämpfers mit beeinflußt werden.

Die erfindungsgemäße Anordnung eignet sich besonders gut in Verbindung mit einer nachgiebig ausgebildeten Drosselverbindung, die man bereits an einigen Kraftstoffeinspritzpumpen finden kann und bei der die Verbindung zwischen Einstellgestänge und Drosselwelle nicht starr, sondern beispielsweise federnd ausgebildet ist. Wird die nachgiebige Drosselverbindung im Zusammenhang mit einem Stoßdämpfer verwendet, so sind schnelle Verstellungen der Drosselsteuerung durch die Bedienungsperson möglich und zulässig, ohne daß die nachteiligen Abgasausstöße auftreten.

Eine nachgiebige Drosselverbindung ist vorzugsweise dadurch gegeben, daß der Drosselhebel zwischen einer ersten und einer zweiten Lage relativ zu der Drosselwelle verdrehbar ist und daß die Relativverdrehung des Drosselhebels durch wenigstens eine Feder eingeschränkt ist, welche durch ihre Vorspannung den Drosselhebel in eine vorbestimmte Lage relativ zu der Drosselwelle drängt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: einen nachgebenden Drosselhebel, der an einer durch Phantomlinien angedeuteten Kraftstoffeinspritzpumpe befestigt ist,
- Fig. 2: die perspektivische Darstellung eines Details einer Kraftstoffeinspritzpumpe von oben, bei der die Abdeckung entfernt wurde und die eine erfindungsgemäße Ausbildung der Dämpfungsvorrichtung und einer Nockenstruktur enthält,
- Fig. 3 und 4: die Seiten- und Stirnansicht der Nockenstruktur gemäß Fig. 2,
- Fig. 5: die Explosionsdarstellung der Dämpfungsvorrichtung gemäß Fig. 2 und
- Fig. 6: eine alternative Ausführungsform der Relation zwischen der erfindungsgemäßen Dämpfungsanordnung und der Nockenstruktur.

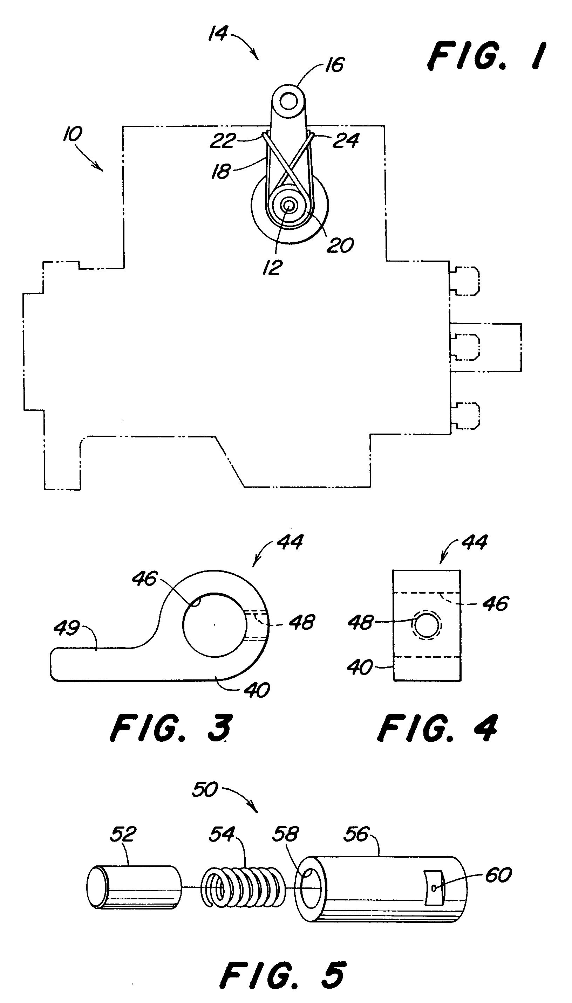

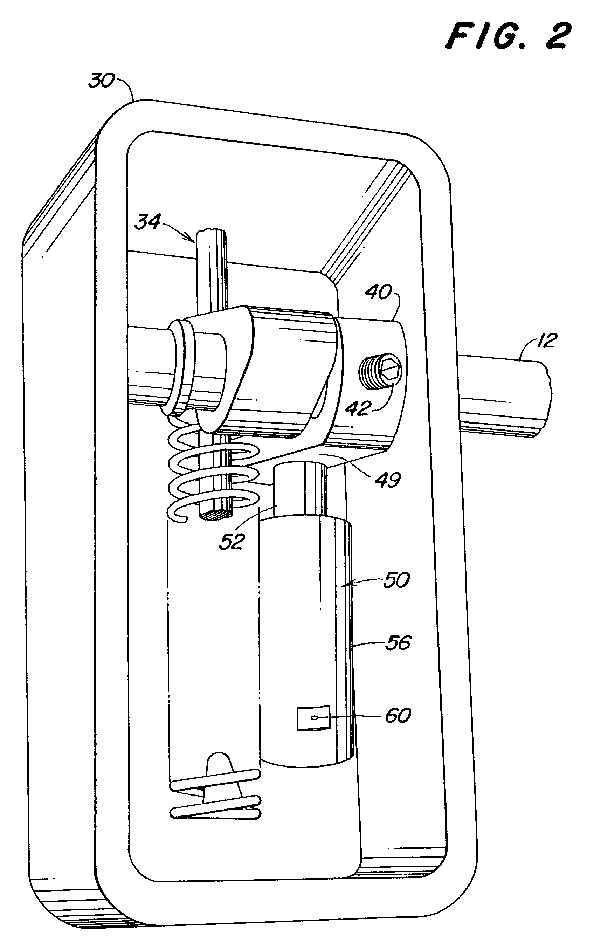

In Fig. 1 sind die Umgrenzungslinien einer Kraftstoffeinspritzpumpe 10 im wesentlichen durch Phantomlinien dargestellt. Die Kraftstoffeinspritzpumpe 10 spritzt in Abhängigkeit der Drehlage einer Drosselwelle 12 unterschiedliche Kraftstoffmengen in eine nicht dargestellte Verbrennungskraftmaschine ein.

Ein federnd nachgebender Drosselhebel 14, der der Einstellung der Drehlage der Drosselwelle 12 dient, ist mit dieser verbunden. Es kann jede geeignete nachgebende Ausbildung für den Drosselhebel 14 verwendet werden. Bei der dargestellten Ausbildung handelt es sich lediglich um ein Beispiel. Der in der Zeichnung dargestellte nachgebende Drosselhebel 14 enthält einen Primärhebel 16, der drehbar auf oder nahe eines Endes der Drosselwelle 12 befestigt ist. Die Lage des Primärhebels 16 wird über ein geeignetes, nicht dargestelltes Gestänge unmittelbar durch die Bedienungsperson eingestellt. Ein Sekundärhebel 18 liegt gemäß Fig. 1 hinter dem Primärhebel 16 und ist fest mit der Drosselwelle 12 verbunden. Ein Federbügel 20 verläuft um die Drosselwelle 12 und enthält Enden 22, 24, die sowohl mit dem Primärhebel 16 als auch mit dem Sekundärhebel 18 in Eingriff stehen.

Es ist offensichtlich, daß dann, wenn die Bedienungsperson den Primärhebel 16 bezüglich Fig. 1 nach links bewegt, wegen des Eingriffs mit dem Primärhebel 16 auch das Federbügelende 22 nach links bewegt wird, während das Federbügelende 24 mit zunehmender Kraft des Federbügels 20 den Sekundärhebel 18 in eine Parallelstellung zum Primärhebel 16 drängt. Bei einer Verstellung des Primärhebels 16 nach rechts tritt die entgegengerichtete Wirkung auf.

Aus Fig. 2 geht ein Teilbereich des Gehäuses 30 der Kraftstoffeinspritzpumpe 10 hervor. Die Drosselwelle 12 ist drehbar in diesem Gehäusebereich gelagert, wobei der nachgebende Drosselhebel 14 nahe eines nicht gezeigten äußeren Endes der Drosselwelle 12 befestigt ist. Innerhalb des Gehäuses 30 weist die Drosselwelle 12 einen Hebelmechanismus 32 auf, der zusammen mit verschiedenen weiteren Mechanismen 34 der Einstellung des austretenden Kraftstoffvolumens der Kraftstoffeinspritzpumpe in Abhängigkeit der Drehstellung der Drosselwelle 12 dient. Derartige weitere Mechanismen 34 sind bekannt und werden daher hier nicht näher beschrieben.

Gemäß vorliegender Erfindung ist um die Drosselwelle 12 eine Nockenstruktur 40 angeordnet und über einen Gewindestift 42 drehfest mit der Drosselwelle 12 verbunden. Wie im Detail aus Fig. 3 und 4 hervorgeht, enthält die Nockenstruktur 40 im wesentlichen einen ringförmigen Bereich 44 mit einer zentralen Bohrung 46, die eng an die Drosselwelle 12 angepaßt ist. Eine Gewindebohrung 48 ist für die Aufnahme des Gewindestiftes 42 vorgesehen. Ferner steht ein Schenkel 49 nach außen von dem ringförmigen Bereich 44 ab.

Wie aus Fig. 2 ersichtlich, befindet sich eine Dämpfungseinrichtung 50 innerhalb des Gehäuses 30 und benachbart zu der Nockenstruktur 40. Aus der Explosionsdarstellung der Fig. 5 geht hervor, daß die Dämpfungseinrichtung 50 im wesentlichen aus einem Kolben 52, einer Feder 54 und einem Zylinder 56 besteht. Der Zylinder 56 weist eine zentrale Bohrung 58 auf, in die die Feder 54 und der Kolben 52 hinein schiebbar sind. Der Zylinder 56 enthält ferner im Bereich seines der Bohrungsöffnung abgewandten Endes eine Ablaßöffnung 60. Die Ablaßöffnung 60 verbindet den durch den Kolben 52 eingeschlossenen Raum des Zylinders 56 mit dem Inneren des Gehäuses 30.

Die in Fig. 2 dargestellte Dämpfungseinrichtung 50 ist durch geeignete Mittel, beispielsweise durch Klemmen oder Klebung im Gehäuse 30 an dessen Innenwandung befestigt, wobei das freie, nach außen weisende Ende des Kolbens 52 im Einflußbereich des Schenkels 49 der Nockenstruktur 40 liegt. Bei normalem Betrieb ist das Innere des Gehäuses 30 mit Kraftstoff gefüllt, der durch die Ablaßbohrung 60 in den Zylinder eintreten und aus diesem austreten kann.

Wie bei Betrachtung der Fig. 2 erkennbar ist, wird dann, wenn die Bedienungsperson den nachgebenden Drosselhebel 14 so verdreht, daß der Schenkel 49 der Nockenstruktur 40 gegen den Kolben 52 gedrückt wird, die Bewegung der Drosselwelle 12 abgebremst. Die Abbremsung nimmt mit zunehmender Krafteinwirkung auf den Kolben 52 zu. Die Steigerung der Abbremsung hängt sowohl davon ab, wie die Federkonstante des Federbügels 20 das Hin- und Herschwenken des nachgebenden Drosselhebels 14 beeinflußt, als auch von der Federkonstanten der Feder 54 der Dämpfungseinrichtung 50 und der Durchflußgeschwindigkeit des Kraftstoffs durch die Ablaßöffnung 60. Daher kann auf einfache Weise durch geeignete Auswahl der betroffenen Elemente jeder gewünschte Verzögerungsgrad für eine Kraftstoffeinspritzpumpe verwirklicht werden. Der Konstrukteur kann den Verzögerungsgrad leicht an die Verzögerung anpassen, die zur Vermeidung von Auspuffgasstößen oder dergleichen erforderlich ist. Derartige verzögerte Bewegungen der Drosselwelle 12 stellen wegen der Verwendung des nachgebenden Drosselhebels 14 für die Bedienungsperson kein Problem dar.

Wie aus Fig. 2 hervorgeht, wird eine Bewegung der Drosselwelle 12 in die entgegengesetzte Drehrichtung nicht durch die Dämpfungseinrichtung 50 eingeschränkt, so daß die Verzögerung nur dann zum Tragen kommt, wenn sie benötigt wird.

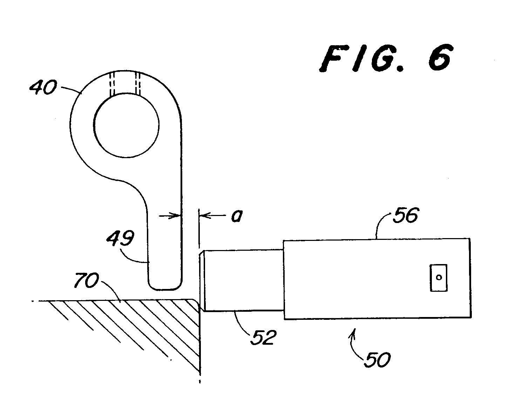

Aus Fig. 6 geht eine alternative Ausgestaltung des Dämpfers gemäß vorliegender Erfindung hervor, die einen Anschlag 70 aufweist, gegen den der Kolben 52 anstoßen kann. Durch diesen Anschlag 70 wird ein Abstand a gebildet, innerhalb dessen die Nockenstruktur 40 sich frei verdrehen läßt, bevor sie durch die Dämpfungseinrichtung 50 beeinflußt wird. Die genaue Lage des Anschlags 70 wird so gewählt, daß kleine Beschleunigungen (beispielsweise solche, bei denen lediglich begrenzte Auspuffgasprobleme auftreten) von der Dämpfungseinrichtung 50 unbeeinflußt bleiben. Der Anschlag 70 kann auf einfache Weise durch Eingießen in das in Fig. 6 nicht näher dargestellte Gehäuse 30 ausgebildet werden. Ein derartiger Anschlag 70 ist insbesondere in Verbindung mit einem Drehzahlregler vom Minimum-Maximum-Typ nützlich, bei dem eine schnelle Drosselreaktion erforderlich ist.

Für einen Fachmann ergeben sich zwanglos zahlreiche Modifikationen der vorliegenden Erfindung. Beispielsweise kann aus einer großen Anzahl von nachgebenden Drosselhebelanordnungen eine beliebige ausgewählt werden. Ebenso wird eine besonders einfache Dämpfungseinrichtung verwendet, die sich leicht einstellen läßt, indem einfach die Größe der Ablaßöffnung 60 und/oder die Stärke der Feder 54 eingestellt wird. Es kann jede andere, ähnlich geeignete Dämpfungseinrichtung verwendet werden. Gleichfalls sind für die Form der Nockenstruktur 40 eine Vielzahl von Varianten denkbar.

Es ist offensichtlich, daß der hervorspringende Vorteil der vorliegenden Erfindung in der äußerst einfachen Ausbildung zu sehen ist. Sie erfüllt die geforderten Dämpfungseigenschaften ohne ein gesondertes Steuersystem, und sie läßt sich einfach innerhalb des Gehäuses einer üblichen Kraftstoffeinspritzpumpe anpassen.

## Patentansprüche

1. Kraftstoffeinspritzpumpe mit einer in einer Befestigungsstruktur (30) drehbar gelagerten Drosselwelle (12), durch deren Verdrehung die Kraftstoffdruckerzeugungsmittel derart beeinflußt werden, daß das Kraftstoffabgabevolumen von der Rotationslage der Drosselwelle (12) abhängt, und mit einem Drosselhebel (14), durch den die Drehlage der Drosselwelle (12) einstellbar ist, gekennzeichnet durch Dämpfungsmittel, die eine mit der Drosselwelle (12) drehfest verbundene Nokkenstruktur (40) sowie einen sich an der Befestigungsstruktur (30) abstützenden Bewegungsdämpfer, insbesondere Stoßdämper (50) aufweisen, gegen den die Nockenstruktur (40) beim Verdrehen der Drosselwelle (12) stößt, so daß die Bewegungen der Nockenstruktur (40) und der Drosselwelle (12) in wenigstens eine Richtung gedämpft werden.

2. Kraftstoffeinspritzpumpe nach Anspruch 1, dadurch gekennzeichnet, daß die Befestigungsstruktur ein Gehäuse (30) enthält, durch das sich die Drosselwelle (12) erstreckt und in dem die Nockenstruktur (40) und der Bewegungsdämpfer (50) angeordnet sind.

3. Kraftstoffeinspritzpumpe nach Anspruch 1 oder 2, dadurch gekennzeichnet, daß der Bewegungsdämpfer (50) einen Zylinder (56), einen teilweise innerhalb des Zylinders (56) angeordneten Kolben (52) und eine Feder (54) enthält, die vollständig innerhalb des Zylinders (56) liegt und den Kolben (52) in Richtung aus dem Zylinder (56) heraus drängt.

4. Kraftstoffeinspritzpumpe nach Anspruch 3, dadurch gekennzeichnet, daß ein vorstehender Teil (49) der Nokkenstruktur (40) sich bei Drehung der Drosselwelle (12) in eine Richtung auf das nach außen ragende Ende des Kolbens (52) zu bewegt und bei Drehung der Drosselwelle (12) in die entgegengesetzte Richtung von diesem weg bewegt, wobei der Kolben (52) mit der Nockenstruktur (40) wenigstens dann in Eingriff tritt, wenn die Nokkenstruktur (40) sich unter Überwindung wenigstens einer vorgebbaren Wegstrecke auf den Kolben (52) zu bewegt hat.

5. Kraftstoffeinspritzpumpe nach Anspruch 4, dadurch gekennzeichnet, daß ein Anschlag (70) vorgesehen ist, gegen den der Kolben (52) bei einer vorgebbaren Lage anstößt, wenn die Drosselwelle (12) in die entgegengesetzte Richtung verdreht wird.

6. Kraftstoffeinspritzpumpe nach einem der Ansprüche 3 bis 5, dadurch gekennzeichnet, daß das Gehäuse (30) mit Arbeitsflüssigkeit gefüllt ist und daß der Zylinder (56) eine Ablaßöffnung (60) enthält.

7. Kraftstoffeinspritzpumpe nach Anspruch 6, dadurch gekennzeichnet, daß die Ablaßöffnung (60) eine den Durchfluß begrenzende Drosselstelle ist, durch die der Durchfluß der Arbeitsflüssigkeit aus dem Zylinder (56) gesteuert wird, wenn der Kolben (52) beim Verdrehen der Drosselwelle (12) durch die Nockenstruktur (40) in den Zylinder (56) drückt wird.

8. Kraftstoffeinspritzpumpe nach einem der Ansprüche 1 bis 7, dadurch gekennzeichnet, daß die Verbindung zwischen Drosselhebel (14) und Drosselwelle (12) nachgiebig ausgebildet ist.

9. Kraftstoffeinspritzpumpe nach einem der Ansprüche 1 bis 8, dadurch gekennzeichnet, daß der Drosselhebel (14) zwischen einer ersten und einer zweiten Lage relativ zu der Drosselwelle (12) verdrehbar ist und daß die Relativverdrehung des Drosselhebels (14) durch wenigstens eine Feder (20) eingeschränkt ist, welche durch ihre Vorspannung den Drosselhebel (14) in eine vorbestimmte Lage relativ zu der Drosselwelle (12) drängt.
